# EUROPÄISCHE PATENTSCHRIFT

(11) **EP 1 764 303 B1**
(45) Veröffentlichungstag und Bekanntmachung des Hinweises auf die Patenterteilung: **10.12.2008**
(21) Anmeldenummer: 06018402.5
(22) Anmeldetag: 02.09.2006
(51) Int. Cl.: B64C 9/22

(54) **Flugzeugflügel mit ausfahrbarer Nasenklappe**
Aircraft wing with a leading edge slat
Aile d'aéronef avec un bec de bord d'attaque

(30) Priorität: 17.09.2005 DE 102005044549
(43) Veröffentlichungstag der Anmeldung: 21.03.2007
(73) Patentinhaber: EADS Deutschland GmbH, 85521 Ottobrunn (DE)
(72) Erfinder: Perez-Sanchez, Juan, 83620 Feldkirchen-Westerham (DE)

(56) Entgegenhaltungen:
- DE-B3- 10 328 717
- GB-A- 2 073 681
- US-A- 2 218 114
- US-A- 2 973 925
- US-A- 5 651 513

## Beschreibung

Die vorliegende Erfindung bezieht sich auf einen Flugzeugflügel mit einem Flügelkasten und zumindest einer Nasenklappe, die aus einer Ruhestellung am Flügelkasten anliegend, um eine außerhalb der Flügelstruktur quer zur Anströmrichtung liegende Nasenschwenkachse in eine Betriebsstellung mit Abstand vor dem Flügelkasten ausfahrbar ist.

Bei fast allen Flugzeugen werden nach dem Stand der Technik zur Auftriebserhöhung insbesondere bei hohen Anstellwinkeln ausfahrbare Nasenklappen am Tragflügel verwendet. Es sind verschiedenste Ausführungsformen solcher Klappen im Stand der Technik bekannt, wie z. B. "Droop-Nose-Klappen", "Krüger-Klappen" oder "Spalt-Nasenklappen". Auch unterschiedlichste Formen und Konstruktionen von Antrieben bzw. Lagerungen solcher ausfahrbaren Nasenklappen sind bekannt. Besonders für die Klappenführung von sogenannten Spalt-Nasenklappen werden Spindelantriebe, Zahnstangen-Ritzelantriebe oder Kulissen-Rollen-Führungsantriebe verwendet. In allen Fällen ist das Problem zu lösen, dass bei den sogenannten Spalt-Nasenklappen sich die notwendige Bewegungsbahn nicht als Rotation um eine am Flügel befindliche Lagerstelle darstellen lässt und deshalb die Ausfahrbewegung als Kombination einer Translation und einer Rotation verwirklicht wird, wodurch dementsprechende Anforderungen an die Ausfahrgeometrie der Betätigungseinrichtung erfüllt werden müssen. In der Regel lassen sich diese Anforderungen mittels einer Kulissenführung, bei der ein Rollenpaar sich über eine Schiene bewegt, erfüllen. Die geforderte Ausfahrbewegung der Nasenklappe relativ zum Flügel kann aber auch durch eine Drehung der Klappe um eine quer zur Anströmrichtung liegende Achse erfolgen, die außerhalb der Flügelstruktur liegt, was bei bekannten Lösungen üblicherweise mit Spindelantriebsstangen bewirkt wird.

Diese Lösungen mit Spindelantriebsstangen haben den Nachteil, dass sie in Richtung Tragflügelstruktur erheblichen Platz beanspruchen, d. h. dass die Spindelantriebsstangen üblicherweise weit in den in der Flügelstruktur untergebrachten Tankraum hineinragen, wo sie durch sogenannte Druckkanister gegenüber dem Tankraum aufwendig abgedichtet werden müssen. Darüber hinaus sind diese Konstruktionen aufgrund der langen Spindeln auch bezüglich des Baugewichts nicht optimal.

US 2 973 925 A offenbart einen Flugzeugflügel gemäß dem Oberbegriff des Anspruchs 1.

Aufgabe der vorliegenden Erfindung ist es deshalb, einen Flugzeugflügel mit einer ausfahrbaren Nasenklappe zu schaffen, welcher die bisherigen platz- und gewichtsaufwendigen Lösungen ersetzt, wobei bezüglich des Ausfahrweges und damit der Positionierung der Nasenklappe zum feststehenden Flügel große Variabilität zulässig sein soll. Darüber hinaus soll die neu zu schaffende Lösung mit möglichst wenigen beweglichen Teilen auskommen um die Forderung nach Wartungsfreundlichkeit zu erfüllen.

Erfindungsgemäß werden die gestellten Aufgaben gelöst von einem Flugzeugflügel nach dem Patentanspruch 1, in welchem
a) die Nasenklappe mittels wenigstens zweier quer zur Anströmrichtung von einander beabstandeter Faltscharniere am Flügelkasten anlenkt ist,
b) wobei die Faltscharniere jeweils zwei Scharnierflügel umfassen, welche über ein gemeinsames Faltlager gegeneinander schwenkbar verbunden sind und von denen einer am Flügelkasten, der andere an der Nasenklappe schwenkbar angeschlagen ist,
c) wobei jeweils das gemeinsame Faltlager, das flügelkastenseitige Schwenklager und das nasenklappenseitige Schwenklager, so angepasst sind, dass sich ihre Schwenkachsen in einem gemeinsamen Punkt auf der Nasenklappenschwenkachse schneiden und
d) die Faltlager der beabstandeten Faltscharniere an ihren oberen Enden durch einen oberen Querlenker und an ihren unteren Enden durch einen unteren Querlenker jeweils gelenkig miteinander verbunden sind derart, dass die beiden Querlenker und die beiden Faltlager ein in seinen Winkeln veränderbares Parallelogramm bilden und wobei
e) in diesem Parallelogramm ein in seiner Länge veränderbarer Diagonallenker gelenkig mit diagonal gegenüberliegenden Gelenkpunkten der Querlenker verbunden ist.

Die erfindungsgemäße Merkmalskombination kann für sich an erster Stelle bauliche Einfachheit in Anspruch nehmen mit allen daraus sich ergebenden Konsequenzen. Lediglich durch zwei beabstandete Faltscharniere, die jeweils aus zwei Scharnierflügeln bestehen, wird der Ausfahrmechanismus für die Nasenklappe gebildet, wobei der Antrieb in Form der Längenveränderung des Diagonallenkers ebenfalls baulich extrem einfach gestaltet ist. Jegliche Beeinträchtigung des Raumes des feststehenden Flügelkastens unterbleibt. Es wird gegenüber bekannten Lösungen in erheblichem Umfang Baugewicht eingespart und es wird durch die Minimierung der beweglichen Lagerstellen und die Minimierung der dort auftretenden Bewegungsgrößen in höchstem Maß Betriebssicherheit und dadurch auch Wartungsfreundlichkeit gewährleistet.

Aus der DE 103 28 717 B3 ist zwar eine Betätigungseinrichtung für eine an der Hinterkante eines Tragflügels angeordnete Ruderklappe bekannt, bei der eine der erfindungsgemäßen Lösung ähnliche Betätigungseinrichtung, nämlich eine sogenannte Pyramidengetriebeanordnung verwendet wird, bei der die Drehachse für die Ruderklappe ebenfalls mit Abstand von der Ebene des Flügelprofils liegt. Die dort offenbarte Betätigungseinrichtung liegt jedoch in ihrer baulichen Ausgestaltung erheblich komplizierter als die erfindungsgemäße Einrichtung, indem sie eine Vielzahl von beweglichen Elementen, dementsprechend viele Lagerstellen und dementsprechend hohes Baugewicht aufweist. Darüber hinaus erfolgt der Antrieb der Betätigungseinrichtung durch eine sogenannte Drehaktuatoreinrichtung, die das Verstelldrehmoment auf die Schwenkelemente des sogenannten Pyramidengetriebes ausübt. Auch hierdurch müssen diese Elemente entsprechend massiv ausgestaltet sein, was sich nachteilig auf das Baugewicht der dortigen Lösung auswirkt.

Eine erste vorteilhafte Ausgestaltung des erfindungsgemäßen Flugzeugflügels besteht darin, dass die Scharnierflügel und ihre Schwenkachsen so angepasst sind, dass bei maximal ausgefahrener Nasenklappe die Scharnierflügel eine gestreckte Position (180°) in einer in Anströmrichtung des Flugzeugflügels liegenden Ebene einnehmen. In dieser hoch belasteten Position entfällt die Torsionsbeanspruchung auf die Scharnierflügel praktisch vollkommen und es ist zusätzlich von Seiten des Antriebselementes, nämlich des längenveränderbaren Diagonallenkers aus nur eine geringe Haltekraft aufzubringen.

Eine weitere vorteilhafte Ausgestaltung der Erfindung bezieht sich auf einen Flugzeugflügel mit nebeneinander angeordneten Nasenklappen und besteht darin, dass zur gleichsinnigen Bewegung der Nasenklappen jeweils die oberen und die unteren Querlenker mit benachbarten oberen und unteren Querlenkern durch Längsstreben verbunden sind. Dadurch wird also die Betätigungsbewegung für eine erste Nasenklappe in einfacher Weise durch die Längsstreben auf die benachbarte Nasenklappe übertragen, so dass man, falls gewünscht, mit einem einzigen aktiven Antriebselement auskommen kann, um gleichzeitig mehrere, nebeneinanderliegende Nasenklappen zu verfahren.

Weiterhin ist es vorteilhaft, wenn bei einem erfindungsgemäßen Flugzeugflügel der Diagonallenker als biegesteifer Linearaktuator ausgebildet ist. In diesem Fall wird also der Diagonallenker in Gänze als Aktuator, im Regelfall eine fluidische Kolbenzylindereinheit, ausgebildet, wie sie als tausendfach bewährtes Maschinenelement in jeder gewünschten Länge und in jedem gewünschten Betätigungskraftbereich verfügbar ist.

Weiterhin ist es im Sinne geringen Baugewichts von Vorteil, wenn die Scharnierflügel als torsions- und biegesteife Fachwerkstrukturen ausgebildet sind. Durch die geringe räumliche Ausdehnung der Faltscharniere bzw. des gesamten Betätigungsmechanismus für das Ausfahren der Nasenklappe können diese Faltscharniere einschließlich der sie verbindenden Lenker in vorteilhafter Weise mit einer strömungsgünstigen Abdeckung versehen werden.

Eine vorteilhafte Weiterbildung erfährt die Erfindung dadurch, dass die Lagerkonsolen für wenigstens ein flügelkastenseitiges Schwenklager um eine im wesentlichen parallel zur Anströmrichtung liegende Achse begrenzt schwenkbar am Flügelkasten angeschlagen ist. Diese Ausgestaltung ist vor allem dann von Vorteil, wenn es sich um vergleichsweise lange Nasenklappen für sehr große Flugzeugflügel mit entsprechend großer Spannweite handelt, weil solche Flugzeugflügel sich im Betrieb sich bis zu einem gewissen Grad durchbiegen. Die begrenzt schwenkbare Anlenkung der flügelkastenseitigen Schwenklager vermeidet so eine Verbiegung des Ausfahrmechanismus bei weit auseinanderliegenden Faltscharnieren.

Anhand der beigefügten Zeichnungen wird die Erfindung in Ausführungsbeispielen erläutert.

In den Zeichnungen zeigt
- Fig. 1: den Längsschnitt eines Flugzeugflügels mit Flügelkasten und ausfahrbarer Nasenklappe, im oberen Bereich verkleinert, im unteren Bereich vergrößert mit der außerhalb der Flügelstruktur liegenden Drehachse,
- Fig. 2: ein Schrägbild des vorderen Bereichs eines Flugzeugflügels gemäß Fig. 1 mit einer erfindungsgemäß angelenkten Nasenklappe schematisch, wobei die Nasenklappe am Flügelkasten anliegt.
- Fig. 3: ein Schrägbild entsprechend Fig. 2, wobei die Nasenklappe in einer Betriebsstellung mit Abstand vor dem Flügelkasten ausgefahren ist.
- Fig. 4: eine Seitenansicht des Flügelabschnitts gemäß Fig. 2 in Blickrichtung IV gemäß Fig. 2.
- Fig. 5: eine der Fig. 4 entsprechende Seitenansicht der Anordnung gemäß Fig. 3 entsprechend dem dort eingezeigten Pfeil V.
- Fig. 6: die Anordnung gemäß Fig. 2 in Frontansicht, wobei nur der Verstellmechanismus mit zwei Faltscharnieren und dem durch Querlenker und Diagonallenker gebildeten Betätigungsparallelogramm dargestellt ist.
- Fig. 7: eine Ansicht entsprechend Fig. 6, jedoch bei ausgefahrener Nasenklappe.
- Fig. 8: eine Anordnung gemäß Fig. 6 in Draufsicht und
- Fig. 9: einen Flugzeugflügel, bei dem neben einer ersten Nasenklappe 2 benachbart eine zweite Nasenklappe 2b vorgesehen ist, die gleichsinnig verstellbar ist, in einer Ansicht entsprechend Fig. 8.

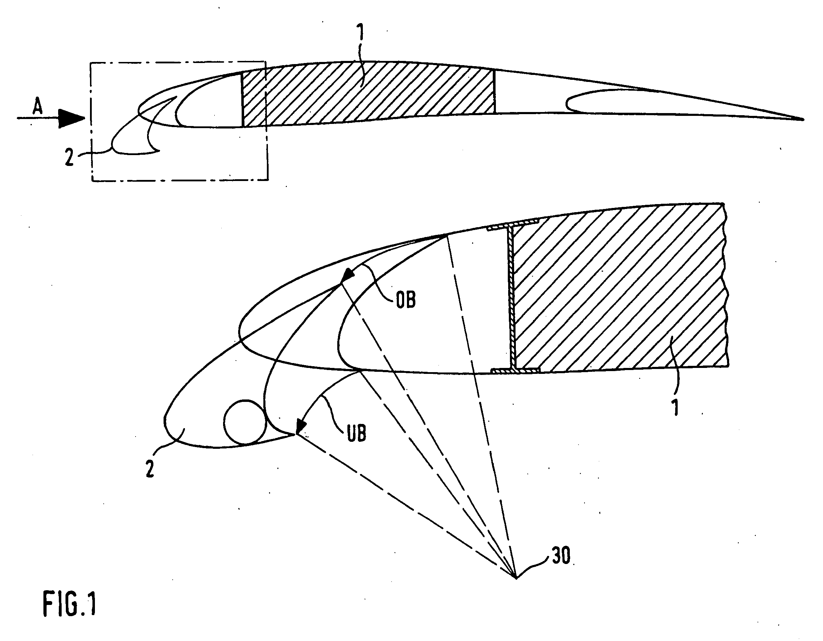

In der oberen Hälfte von Fig. 1 ist schematisch im Querschnitt ein Flugzeugflügel mit ausfahrbarer Nasenklappe 2 dargestellt. Der feststehende Teil des Flügels ist als Flügelkasten 1 bezeichnet, die Anströmrichtung mit A. In der unteren Hälfte von Fig. 1 ist der in der oberen Hälfte strichpunktiert eingezeichnete Abschnitt des Flugzeugflügels vergrößert dargestellt. Der Flügelkasten 1, in dem üblicherweise Kraftstofftanks untergebracht sind, ist mit einer Schottwand gegenüber dem Nasenbereich des Flügels abgegrenzt. Zusätzlich zur Nasenklappe 2 sind noch Bewegungspfeile für den oberen Bewegungsweg OB und für den unteren Bewegungsweg UB eingezeichnet, aus denen sich ergibt, dass die entsprechenden Stellen der Nasenklappe 2 sich auf Kreisbogen um eine Nasenklappenschwenkachse 30, die unterhalb der Flügelstruktur liegt, bewegen.

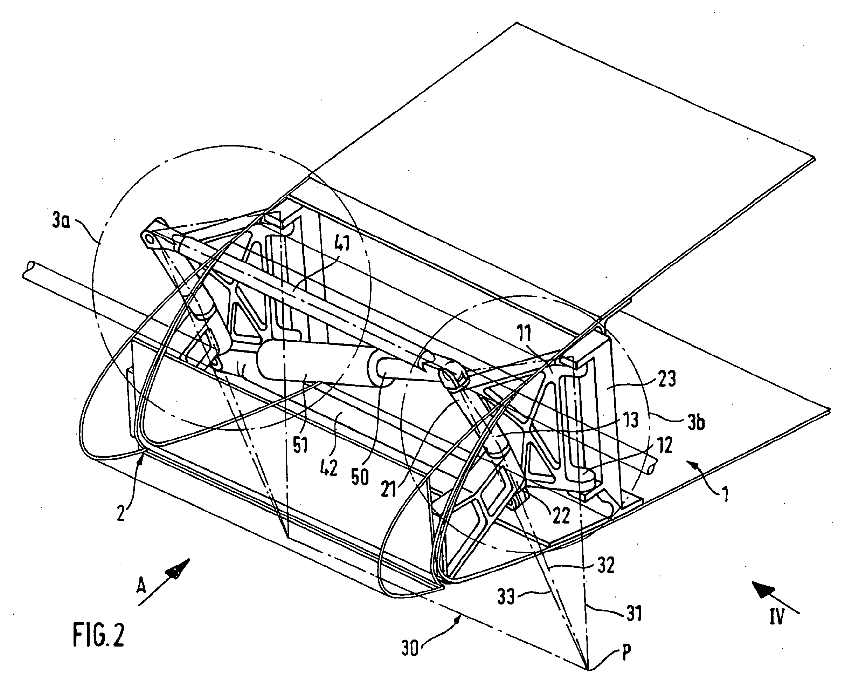

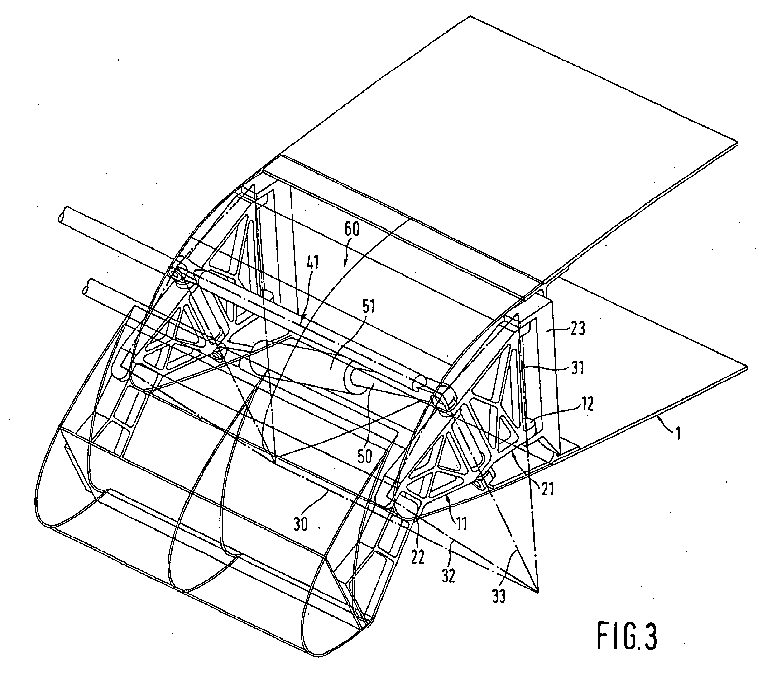

Der Mechanismus zum Ausfahren der Nasenklappe 2 ergibt sich aus dem Schrägbild gemäß Fig. 2, welches die Nasenklappe in Ruhestellung am Flügelkasten 1 anliegend zeigt. Die Nasenklappe 2 ist mittels zweier quer zur Anströmrichtung A voneinander beabstandeter Faltscharniere 3a und 3b am Flügelkasten 1 angelenkt. Die Faltscharniere 3a und 3b sind in ihrer Gesamtheit mit strichpunktierten Kreisen umgeben. Die Faltscharniere 3a, 3b sind gleich ausgestaltet, so dass sich die Beschreibung der Gestaltung auf ein Faltscharnier beschränken kann. Jeweils ein Faltscharnier 3a, 3b besteht aus zwei Scharnierflügeln 11, 21. Die Scharnierflügel 11, 21 sind über ein gemeinsames Faltlager 13 aufeinander schwenkbar gelagert. Ein Scharnierflügel 11 ist in Schwenklagern 12 über eine Lagerkonsole 23 am Flügelkasten 1 angelenkt, wobei die Schwenkachse der Lager 12 mit 31 bezeichnet ist und im wesentlichen vertikal ausgerichtet ist. Der zweite Scharnierflügel 21 ist an einer Lagerkonsole 22 der Nasenklappe schwenkbar angelenkt. Die entsprechende Schwenkachse dieses Lagers ist mit 32 bezeichnet (besser erkennbar in Fig. 3), wobei die Schwenklager 12 und die Schwenklager 22 so ausgerichtet sind, dass sich die Schwenkachsen 31 und 32 in einem Punkt auf der außerhalb der Flügelstruktur liegenden Nasenschwenkachse 30 schneiden. Auch die Schwenkachse des Faltlagers 13 muss durch diesen gemeinsamen Schnittpunkt T verlaufen. Die Scharnierflügel 11 und 21 sind als torsions- und biegesteife Fachwerkstrukturen ausgebildet.

Die oberen Enden der Faltlager 13 der Faltscharniere 3a und 3b sind mit einem oberen Querlenker 41 gelenkig verbunden. Ebenso sind die unteren Enden der Faltlager 13 der Faltscharniere 3a und 3b mit einem unteren Querlenker 42 gelenkig miteinander verbunden und zwar so, dass die beiden Querlenker 41, 42 und die beiden Faltlager 13a, 13b ein in seinen Winkeln veränderbares Parallelogramm bilden. In diesem Parallelogramm ist ein in seiner Länge veränderbarer Diagonallenker 50 gelenkig mit diagonal gegenüberliegenden Gelenkpunkten der Querlenker 41, 42 verbunden, wobei der dargestellte Diagonallenker 50 als biegesteifer Linearaktuator 51 ausgebildet ist.

In der in Fig. 2 dargestellten Ruhestellung liegt die Nasenklappe 2 an einem entsprechend angepassten Oberflächenprofil (Abdeckung 60) des Flügelkastens 1 an und die Faltscharniere 3a, 3b befinden sich in dem am weitesten zusammengefalteten Zustand. Der Linearaktuator 51 weist seine kürzeste Endstellung auf.

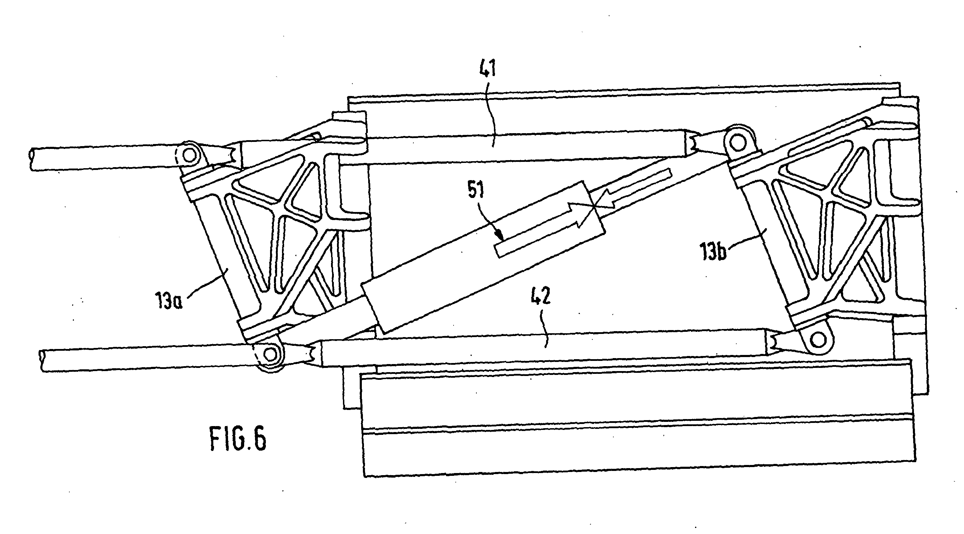

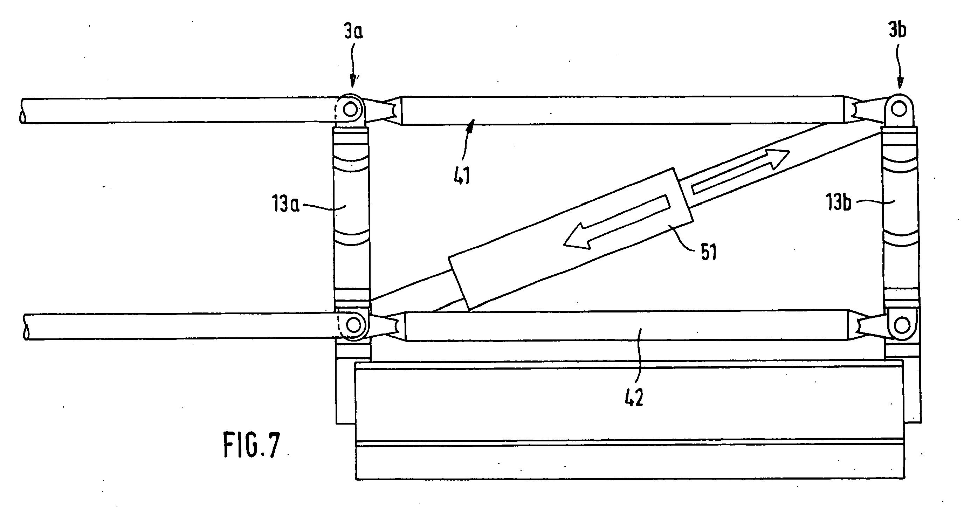

Durch Verlängerung des Linearaktuators 51 auf seine maximale Länge sind die Faltscharniere 3a, 3b in die in Fig. 3 dargestellte, voll ausgeklappte Stellung (180°) verfahren worden, wodurch die Nasenklappe 2 in ihre andere Endstellung mit maximalem Abstand von Flügelkasten 1 entsprechend der schematischen Bewegungsrichtungen OB und UB aus Fig. 1 verfahren wurde. Die Scharnierflügel 11, 21 haben dabei Schwenkbewegungen um die Achsen 32 und 31 ausgeführt und sich um die Achse 33 gegeneinander verschwenkt. Das aus den Faltlagern 13a und 13b (vergl. Fig. 6 und 7) der Faltscharniere 3a und 3b sowie aus dem oberen Querlenker 41 und dem unteren Querlenker 42 gebildete Parallelogramm ist zur Spezialform eines Parallelogramms, nämlich zu einem Rechteck geworden (vergl. Fig. 7).

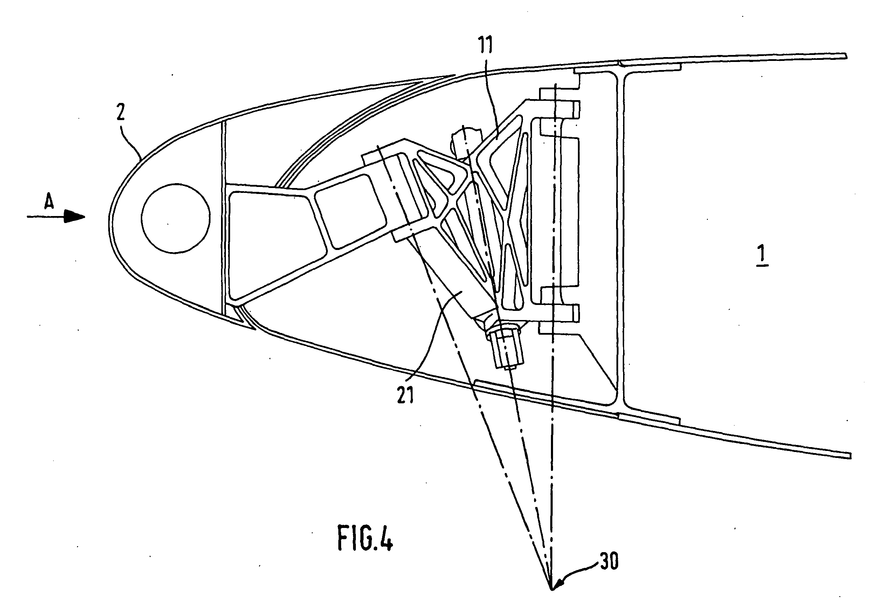

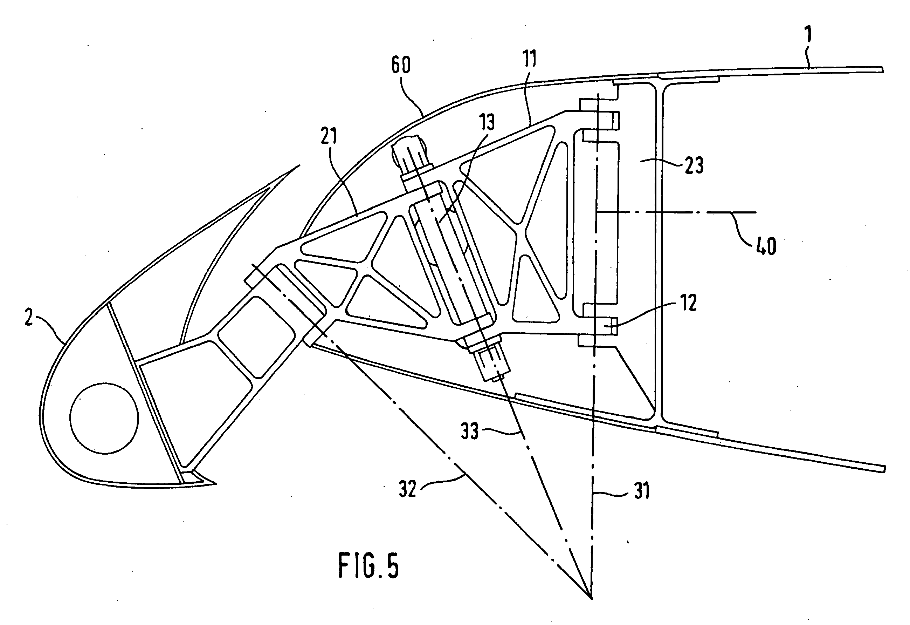

In den Seitenansichten nach Fig. 4 (eingefahrene Nasenklappe) und Fig. 5 (voll ausgefahrene Nasenklappe) kann das Ausfalten des Faltscharniers 3a, 3b nachvollzogen werden. Zum Schutz des Betätigungsmechanismus und zur Vermeidung unkontrollierter Strömungen sind die Faltscharniere 3a, 3b einschließlich der sie verbindenden Lenker mit einer strömungsgünstigen Abdeckung 60 versehen, die in ihrem Profil dem inneren Profil der Nasenklappe 2 angepasst ist.

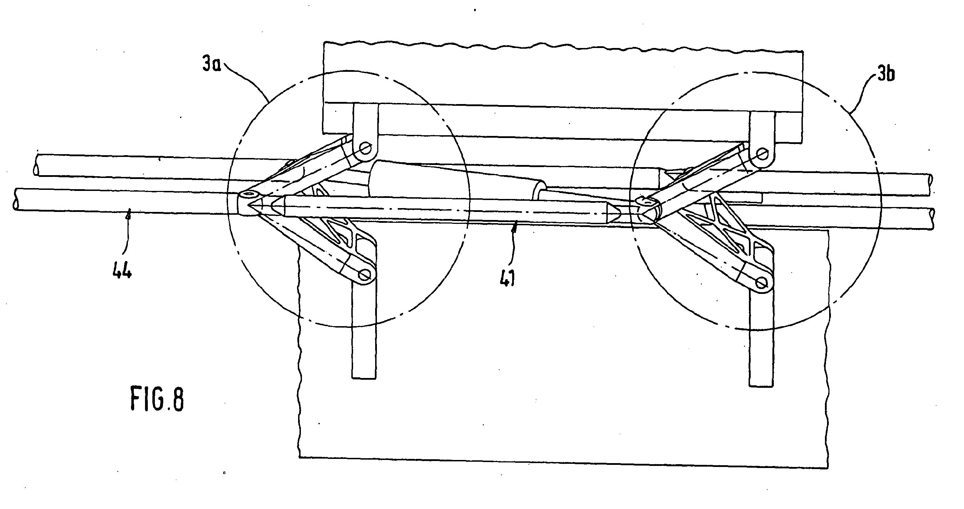

Die Draufsicht auf den Verstellmechanismus gemäß Fig. 8, in der sich die Nasenklappe in voll eingefahrenem Zustand befindet, dient einer weiteren Veranschaulichung des Funktionsprinzips. Weiterhin ist in Fig. 8 eine Längsstrebe 44 vorgesehen, die zu einer benachbarten Verstelleinrichtung für eine benachbarte Nasenklappe führt.

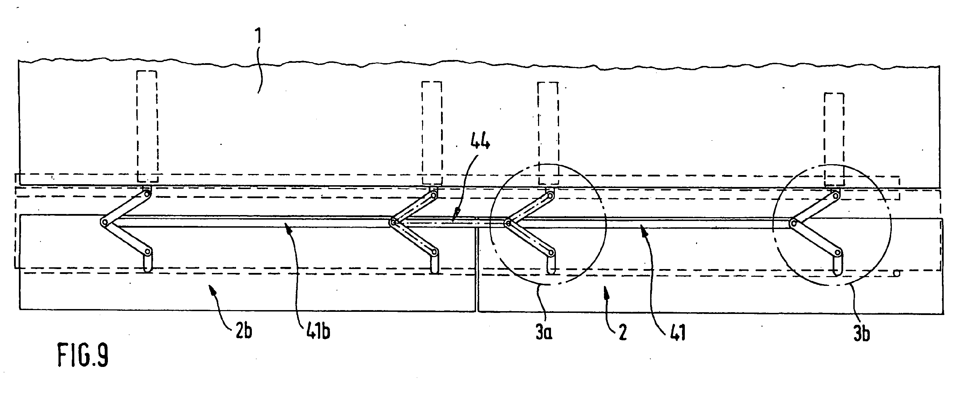

In Fig. 9 ist eine solche Anordnung mit zwei benachbarten Nasenklappe dargestellt, wobei die benachbarte zweite Nasenklappe die Bezeichnung 2b trägt. Auch für die benachbarte Nasenklappe 2b sind zwei beabstandete Faltscharniere entsprechend den Faltscharnieren 3a, 3b für die Nasenklappe 2 vorgesehen, die jedoch nicht näher in der Figur bezeichnet sind. Bei der dargestellten Ausführungsform ist der obere Querlenker 41 für die Nasenklappe 2 mit dem oberen Querlenker 41 b für die Nasenklappe 2b mittels einer Längsstrebe 44 verbunden. In gleicher Weise sind die unteren Querlenker 42 der Mechanismen mit einer Längsstrebe verbunden, so dass eine gleichsinnige Bewegung der Mechanismen und damit der beiden Nasenklappen 2, 2b gewährleistet ist. Bei dieser Anordnung kann mit einem einzigen Antrieb in Form eines Linearaktuators 51 etwa für die Nasenklappeneinrichtung 2 ausgekommen werden. Es ist jedoch auch denkbar, anstelle eines Linearaktuators für die ersten Nasenklappe einen solchen Linearakuator in das zwischen der rechten Nasenklappe 2 und der linken Nasenklappe 2b sich ausbildende Parallelogramm mit den Längsstreben 44 einzusetzen, so dass dann praktisch von der Mitte aus die Betätigung der Nasenklappen 2, 2b mit einem mittleren Linearaktuator 51 erfolgt.

## Patentansprüche

1. Flugzeugflügel mit einem Flügelkasten (1) und zumindest einer Nasenklappe (2), die aus einer Ruhestellung am Flügelkasten (1) anliegend, um eine außerhalb der Flügelstruktur quer zur Anströmrichtung (A) liegende Nasenklappenschwenkachse (30) in eine Betriebsstellung mit Abstand vor dem Flügelkasten (1) ausfahrbar ist, wobei
a) die Nasenklappe (2) mittels wenigstens zweier quer zur Anströmrichtung (A) von einander beabstandeter Faltscharniere (3a, 3b) am Flügelkasten (1) anlenkt ist,
b) wobei die Faltscharniere (3a, 3b) jeweils zwei Scharnierflügel (11, 21) umfassen, welche über ein gemeinsames Faltlager (13) gegeneinander schwenkbar verbunden sind und von denen einer (21) am Flügelkasten (1), der andere (11) an der Nasenklappe (2) schwenkbar angeschlagen ist, und
c) wobei jeweils das gemeinsame Faltlager (13), das flügelkastenseitige Schwenklager (12) und das nasenklappenseitige Schwenklager (22), so angepasst sind, dass sich ihre Schwenkachsen (33, 31, 32) in einem gemeinsamen Punkt (P) auf der Nasenklappenschwenkachse (30) schneiden **dadurch gekennzeichnet, dass**
d) die Faltlager (13) der beabstandeten Faltscharniere (3a, 3b) man ihren oberen Enden durch einen oberen Querlenker (41) und an ihren unteren Enden durch einen unteren Querlenker (42) jeweils gelenkig miteinander verbunden sind derart, dass die beiden Querlenker (41, 42) und die beiden Faltlager (13a, b) ein in seinen Winkeln veränderbares Parallelogramm bilden und
e) dass in diesem Parallelogramm ein in seiner Länge veränderbarer Diagonallenker (50) gelenkig mit, diagonal gegenüberliegenden Gelenkpunkten der Querlenker (41, 42) verbunden ist.

2. Flugzeugflügel nach Anspruch 1, **dadurch gekennzeichnet, dass** die Scharnierflügel (11,21) und ihre Schwenkachsen (31, 32, 33) so angepasst sind, dass bei maximal ausgefahrener Nasenklappe (2) die Scharnierflügel eine gestreckte Position (180°) in einer in Anströmrichtung (A) liegenden Ebene einnehmen.

3. Flugzeugflügel nach Anspruch 1 oder Anspruch 2 mit nebeneinander angeordneten Nasenklappen (2), **dadurch gekennzeichnet, dass** zur gleichsinnigen Bewegung der Nasenklappen jeweils die oberen und die unteren Querlenker (41, 42) mit benachbarten oberen und unteren Querlenkern durch Längsstreben (44) verbunden sind.

4. Flugzeugflügel nach den Ansprüchen 1 bis 3, **dadurch gekennzeichnet, dass** der Diagonallenker (50) als biegesteifer Linearaktuator (51) ausgebildet ist.

5. Flugzeugflügel nach den Ansprüchen 1 bis 4, **dadurch gekennzeichnet, dass** die Scharnierflügel (11,21) als torsions- und biegesteife Fachwerkstrukturen ausgebildet sind.

6. Flugzeugflügel nach den Ansprüchen 1 bis 5, **dadurch gekennzeichnet, dass** die Faltscharniere (3a, 3b) einschließlich der sie verbindenden Lenker (41, 42, 50) mit einer strömungsgünstigen Abdeckung (60) versehen sind.

7. Flugzeugflügel nach den Ansprüchen 1 bis 6, **dadurch gekennzeichnet, dass** die Lagerkonsole 23 für wenigstens ein flügelkastenseitiges Schwenklager (12) um eine im wesentlichen parallel zur Anströmrichtung (A) liegende Achse (40) begrenzt schwenkbar am Flügelkasten (1) angeschlagen ist.

## Claims

1. Aircraft wing having a wing box (1) and at least one nose slat (2) which can be extended from a rest position resting on the wing box (1) about a nose slat pivoting axis (30) which is located outside the wing structure transversely with respect to the incident flow direction (A), to an operating position at a distance in front of the wing box (1), wherein:
a) the nose slat (2) is articulated on the wing box (1) by means of at least two folding hinges (3a, 3b) which are at a distance from one another transversely with respect to the incident flow direction (A)
b) with the folding hinges (3a, 3b) each comprising two hinge vanes (11, 21) which are connected via a common folding bearing (13) such that they can pivot with respect to one another, and one (21) of which is attached to the wing box (1) and the other (11) is attached to the nose slat (2) such that they can pivot, and
c) wherein the common folding bearing (13) the pivoting bearing (12) on the wing box side and the pivoting bearing (22) on the nose slat side are each matched to one another such that their pivoting axes (33, 31, 32) intercept at a common point (P) on the nose slat pivoting axis (30),
**characterized in that**
d) the folding bearings (13) of the folding hinges (3a, 3b) which are at a distance from one another are each connected to one another in an articulated manner at their upper ends by means of an upper lateral guide (41) and at their lower ends by a lower lateral guide (42), such that the two lateral guides (41, 42) and the two folding bearings (13a, b) form a variable-angle parallelogram, and
e) **in that**, in this parallelogram, a variable-length diagonal guide (50) is connected in an articulated manner to diagonally opposite articulation points of the lateral guides (41, 42).

2. Aircraft wing according to Claim 1, **characterized in that** the hinge vanes (11, 21) and their pivoting axes (31, 32, 33) are matched such that, when the nose slat (2) is extended to the maximum extent, the hinge vanes assume a stretched-out position (180°) on a plane lying in the incident flow direction (A).

3. Aircraft wing according to Claim 1 or Claim 2 having nose slats (2) which are arranged alongside one another, **characterized in that,** in order to move the nose slats in the same sense, the upper and the lower lateral guides (41, 42) are each connected to adjacent upper and lower lateral guides by longitudinal struts (44).

4. Aircraft wing according to Claims 1 to 3, **characterized in that** the diagonal guide (50) is in the form of an inflexible linear actuator (51).

5. Aircraft wing according to Claims 1 to 4, **characterized in that** the hinge vanes (11, 21) are in the form of torsionally stiff and inflexible framework structures.

6. Aircraft wing according to Claims 1 to 5, **characterized in that** the folding hinges (3a, 3b) including the guides (41, 42, 50) which connect them, are provided with a streamlined cover (60).

7. Aircraft wing according to Claims 1 to 6, **characterized in that** the bearing (23) for at least one pivoting bearing (12) on the wing box side is attached to the wing box (1) such that it can pivot to a limited extent about an axis (40) which is essentially parallel to the incident flow direction (A).

## Revendications

1. Aile d'aéronef, comprenant un caisson d'aile (1) et au moins un bec de bord d'attaque (2) qui peut être sorti, à partir d'une position de repos en appui contre le caisson d'aile (1), dans une position fonctionnelle éloignée en avant du caisson d'aile (1), par pivotement autour d'un axe de pivotement (30) du bec de bord d'attaque situé en dehors de la structure de l'aile transversalement à la direction d'attaque (A),
a) le bec de bord d'attaque (2) étant articulé au caisson d'aile (1) au moyen d'au moins deux charnières pliantes (3a, 3b) espacées l'une de l'autre transversalement à la direction d'attaque (A),
b) les charnières pliantes (3a, 3b) comprenant chacune deux ailes de charnière (11, 21) qui sont connectées de manière à pouvoir pivoter l'une par rapport à l'autre par le biais d'un support pliant commun (13) et dont l'une (21) est montée de manière pivotante au caisson d'aile (1) et l'autre est montée de manière pivotante au bec de bord d'attaque (2), et
c) le palier pliant commun (13), le palier pivotant (12) du côté du caisson d'aile et le palier pivotant (22) du côté du bec de bord d'attaque étant adaptés de telle sorte que leurs axes de pivotement (33, 31, 32) se coupent en un point commun (P) sur l'axe de pivotement (30) du bec de bord d'attaque,
**caractérisée en ce que**
d) les paliers pliants (13) des charnières pliantes espacées (3a, 3b) sont connectés à leurs extrémités supérieures par un bras oscillant transversal supérieur (41) et à leurs extrémités inférieures par un bras oscillant transversal inférieur (42) à chaque fois de manière articulée les uns aux autres, de telle sorte que les deux bras oscillants transversaux (41, 42) et les deux paliers pliants (13a,b) forment un parallélogramme dont les angles peuvent être variés, et
e) **en ce que** dans ce parallélogramme, un bras oscillant diagonal (50) de longueur variable est connecté de manière articulée à des points d'articulation opposés des bras oscillants transversaux (41, 42).

2. Aile d'aéronef selon la revendication 1, **caractérisée en ce que** les ailes de charnière (11, 21) et leurs axes de pivotement (31, 32, 33) sont adaptés de telle sorte que lorsque le bec de bord d'attaque (2) est sorti au maximum, les ailes de charnière adoptent une position étirée (180°) dans un plan situé dans la direction d'attaque (A).

3. Aile d'aéronef selon la revendication 1 ou 2, comprenant des becs de bord d'attaque (2) juxtaposés, **caractérisée en ce que** pour le mouvement dans le même sens des becs de bord d'attaque, les bras oscillants transversaux supérieur et inférieur (41, 42) sont connectés à des bras oscillants transversaux supérieur et inférieur adjacents par des longerons (44).

4. Aile d'aéronef selon l'une quelconque des revendications 1 à 3, **caractérisée en ce que** le bras oscillant diagonal (50) est réalisé sous forme d'actionneur linéaire rigide en flexion (51).

5. Aile d'aéronef selon l'une quelconque des revendications 1 à 4, **caractérisée en ce que** les ailes de charnière (11, 21) sont réalisées sous forme de structures de châssis rigides en flexion et en torsion.

6. Aile d'aéronef selon l'une quelconque des revendications 1 à 5, **caractérisée en ce que** les charnières pliantes (3a, 3b) y compris les bras oscillants (41, 42, 50) qui les relient, sont pourvues d'un revêtement favorisant l'écoulement (60).

7. Aile d'aéronef selon l'une quelconque des revendications 1 à 6, **caractérisée en ce que** la console de palier (23) pour au moins un palier pivotant (12) du côté du caisson d'aile, est montée sur le caisson d'aile (1) de manière à pouvoir pivoter de manière limitée autour d'un axe (40) substantiellement parallèle à la direction d'attaque (A).
